# EUROPEAN PATENT APPLICATION

(11) **EP 4 155 901 A1**
(43) Date of publication of application: **29.03.2023**
(21) Application number: 22189009.8
(22) Date of filing: 05.08.2022
(51) Int. Cl.: G06F 7/544

(54) **SYSTEMS AND METHODS FOR SPARSITY OPERATIONS IN A SPECIALIZED PROCESSING BLOCK**

(30) Priority: 24.09.2021 US 202117485123
(71) Applicant: INTEL Corporation, Santa Clara, CA 95054 (US)
(72) Inventor: GANUSOV, Ilya, San Jose, CA 95124 (US); LANGHAMMER, Martin, Alderbury SP53AB (GB); TUNALI, Nihat, San Jose, CA 95118 (US); WU, Michael, Santa Clara, CA 95054 (US)
(74) Representative: Viering, Jentschura & Partner mbB Patent- und Rechtsanwälte

(57) **Abstract**

This disclosure is directed to a digital signal processing (DSP) block that includes multiple weight registers configurable to receive and store a first plurality of values, and multiple multipliers that are each configurable to receive a respective value of the first plurality of values. The DSP block further includes one or more inputs configurable to receive a second plurality of values, and a multiplexer network configurable to receive the second plurality of values and route each respective value of the second plurality of values to a multiplier of the multipliers. The multipliers are configurable to simultaneously multiply each value of the first plurality of values by a respective value of the second plurality of values to generate a plurality of products. Additionally, the DSP block includes adder circuitry configurable to generate a first sum and a second sum based on the plurality of products.

## Description

### BACKGROUND

The present disclosure relates generally to integrated circuit (IC) devices such as programmable logic devices (PLDs). More particularly, the present disclosure relates to a processing block (e.g., a digital signal processing (DSP) block) that may be included on an integrated circuit device as well as applications that can be performed utilizing the processing block.

This section is intended to introduce the reader to various aspects of art that may be related to various aspects of the present disclosure, which are described and/or claimed below. This discussion is believed to be helpful in providing the reader with background information to facilitate a better understanding of the various aspects of the present disclosure. Accordingly, it may be understood that these statements are to be read in this light, and not as admissions of prior art.

Integrated circuit devices may be used for a variety of purposes or applications, such as machine-learning or artificial intelligence (AI) applications. In some cases, machine-learning and AI architectures may use sparsity schemes corresponding to multiple sparsity ratios. Sparsity refers to processing where some of the values for calculation are zeros. For example, a sparse matrix used in an AI application may contain many zeros. Indeed, implementing sparsity operations has become ever more prevalent to perform multiplication operations more efficiently. However, relative to other types of integrated circuit devices, programmable logic devices may inefficiently implement AI architectures.

### BRIEF DESCRIPTION OF THE DRAWINGS

Various aspects of this disclosure may be better understood upon reading the following detailed description and upon reference to the drawings in which:
FIG. 1 is a block diagram of a system that may implement arithmetic operations using a digital signal processing (DSP) block, in accordance with an embodiment of the present disclosure;
FIG. 2 is a block diagram of the integrated circuit device of FIG. 1, in accordance with an embodiment of the present disclosure;
FIG. 3 is a flow diagram of a process that the DSP block of the integrated circuit device of FIG. 1 may perform when conducting multiplication operations, in accordance with an embodiment of the present disclosure;
FIG. 4 is a block diagram of a virtual bandwidth expansion structure implementable via the DSP block of FIG. 1, in accordance with an embodiment of the present disclosure;
FIG. 5 is a block diagram of a single column within the DSP block structure, in accordance with an embodiment of the present disclosure;
FIG. 6 is a block diagram of a fracturable tensor column of the DSP block of FIG. 1, in accordance with an embodiment of the present disclosure;
FIG. 7 is a diagram of sparsity ratios that may be implemented within the fracturable tensor column 140 of FIG. 6, in accordance with embodiments of the present disclosure;
FIG. 8 is an example of multiplexer (mux) network control for sparsity modes in the fracturable tensor column 140 of the DSP block, in accordance with an embodiment of the present disclosure;
FIG. 9 is a schematic diagram of crossbar wiring structure to support a 4:8 sparsity mode multiplexer structure, in accordance with an embodiment of the present disclosure;
FIG. 10A is a schematic diagram of a 2:4 sparsity ratio crossbar structure implemented with two pairs of four multipliers, in accordance with an embodiment of the present disclosure;
FIG. 10B is a schematic diagram of the fracturable tensor column with an additional 2:1 ratio multiplexer network, in accordance with an embodiment of the present disclosure;
FIG. 11A is a schematic diagram of cascade circuitry for a 2:4 sparsity vector output, in accordance with an embodiment of the present disclosure;
FIG. 11B is a schematic diagram of the compression block of FIG. 11A along with the cascade circuitry for the 2:4 sparsity vector output, in accordance with an embodiment of the present disclosure;
FIG. 12 is a schematic diagram of multiple cascaded DSP blocks using a 2:4 sparsity mode, in accordance with an embodiment of the present disclosure;
FIG. 13 is a schematic diagram of cascade multiplexing in a six lane cascade sparsity mode to convert multiplier output values to sixteen bit floating point values, in accordance with an embodiment of the present disclosure;
FIG. 14A is a schematic diagram of a crossbar pattern for implementing a twenty-five percent (25%) sparsity ratio for a first fracturable tensor column of the DSP block of FIG. 1, in accordance with an embodiment of the present disclosure;
FIG. 14B is a schematic diagram of the crossbar pattern for implementing a twenty-five percent (25%) sparsity ratio for a second fracturable tensor column of the DSP block of FIG. 1, in accordance with an embodiment of the present disclosure;
FIG. 14C is a schematic diagram of the crossbar pattern for implementing a twenty-five percent (25%) sparsity ratio for a third fracturable tensor column of the DSP block of FIG. 1, in accordance with an embodiment of the present disclosure;
FIG. 15 is a schematic diagram of the three fracturable tensor columns of FIGS.14A-C implemented in the DSP block of FIG. 1, in accordance with an embodiment of the present disclosure;
FIG. 16 is an example of accumulation circuitry for a DSP block when supporting a forty percent (40%) sparsity mode, in accordance with an embodiment of the present disclosure;
FIG. 17A is an example of cascade circuitry that offloads accumulation of a DSP block to external registers, in accordance with an embodiment of the present disclosure;
FIG. 17B is an example of cascade circuitry that offloads accumulation of multiple DSP blocks to the external registers, in accordance with an embodiment of the present disclosure; and
FIG. 18 is a data processing system, in accordance with an embodiment of the present disclosure.

### DETAILED DESCRIPTION OF SPECIFIC EMBODIMENTS

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

When introducing elements of various embodiments of the present disclosure, the articles "a," "an," and "the" are intended to mean that there are one or more of the elements. The terms "including" and "having" are intended to be inclusive and mean that there may be additional elements other than the listed elements. Additionally, it should be understood that references to "some embodiments," "embodiments," "one embodiment," or "an embodiment" of the present disclosure are not intended to be interpreted as excluding the existence of additional embodiments that also incorporate the recited features. Furthermore, the phrase A "based on" B is intended to mean that A is at least partially based on B. Moreover, the term "or" is intended to be inclusive (e.g., logical OR) and not exclusive (e.g., logical XOR). In other words, the phrase A "or" B is intended to mean A, B, or both A and B.

As machine learning and artificial intelligence applications have become ever more prevalent, there is a growing desire for circuitry to perform calculations used in machine-learning and artificial intelligence applications. To enable efficiency in hardware design, the same circuitry may also be desired to extend digital signal processing (DSP) block functionality to implement sparsity operations. The present techniques relate to embodiments of a DSP block that may be included in an FPGA and implement sparsity modes (e.g., using multiple sparsity ratios) using minimal routing resources. In general, a DSP block is a type of circuitry that may be used in integrated circuit devices, including programmable logic devices such as field programmable gate arrays (FPGAs), to perform multiplication, accumulation, and addition operations. Thus, while the discussion below may discuss a DSP block or operations performed by a DSP block in the context of an FPGA, it should be noted that the techniques described herein may be implemented in other types of integrated circuit devices and programmable logic device.

The DSP block described herein may harness the flexibility of an FPGA to adapt to emerging algorithms or fix bugs in a planned implementation. The AI FPGA may extend tensor columns to perform sparsity operations by implementing tensor columns that may be decomposed into sub-columns. The tensor columns may include multi-level crossbar architectures corresponding to certain multiplexer patterns that may be applied to different activation inputs of the sub-columns to select inputs according to the sparsity mode (e.g., 2:4, 4:8) of the DSP block. In addition, the sparsity operations may include using multiplexer patterns within the tensor columns of the DSP block to enable routing of register inputs to multiple multipliers within the DSP block. Further, the DSP block may use the activation broadcast across multiple DSP blocks and cascade output values from one DSP block to another to perform large number calculations. The sparsity operations may involve cascading data including two outputs from each tensor column across DSP blocks, thereby enabling larger value sparsity calculations to be performed using the DSP blocks.

The presently described techniques also increase the number of floating-point calculations the tensor columns may perform per second (e.g., TFLOPS) when the tensor columns are configured to operate in sparsity mode. The tensor columns may be able to implement multiple sparsity ratios, and one or more DSP blocks may operate in sparsity mode and cascade results of the operations to other DSP blocks. The techniques described herein may also extend sparsity to tensor structures that have small routing windows.

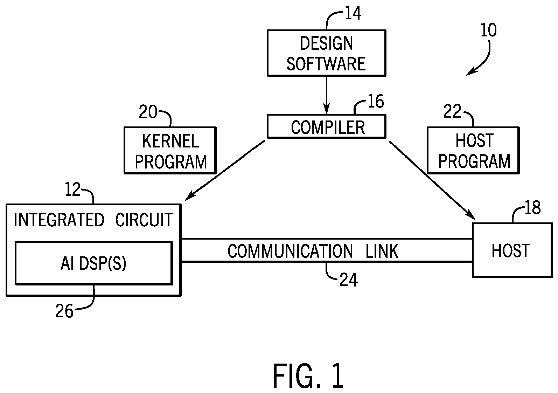

With this in mind, FIG. 1 illustrates a block diagram of a system 10 that may implement arithmetic operations using a DSP block. A designer may desire to implement functionality, such as, but not limited to, machine-learning or AI operations, on an integrated circuit device 12 (such as a field-programmable gate array (FPGA) or an application-specific integrated circuit (ASIC)). In some cases, the designer may specify a high-level program to be implemented, such as an OpenCL program, which may enable the designer to more efficiently and easily provide programming instructions to configure a set of programmable logic cells for the integrated circuit device 12 without specific knowledge of low-level hardware description languages (e.g., Verilog or VHDL). For example, because OpenCL is quite similar to other high-level programming languages, such as C++, designers of programmable logic familiar with such programming languages may have a reduced learning curve than designers that are required to learn unfamiliar low-level hardware description languages to implement new functionalities in the integrated circuit device 12.

The designers may implement their high-level designs using design software 14, such as a version of Intel^{®} Quartus^{®} by INTEL CORPORATION. The design software 14 may use a compiler 16 to convert the high-level program into a lower-level description. The compiler 16 may provide machine-readable instructions representative of the high-level program to a host 18 and the integrated circuit device 12. The host 18 may receive a host program 22 which may be implemented by the kernel programs 20. To implement the host program 22, the host 18 may communicate instructions from the host program 22 to the integrated circuit device 12 via a communications link 24, which may be, for example, direct memory access (DMA) communications or peripheral component interconnect express (PCIe) communications. In some embodiments, the kernel programs 20 and the host 18 may enable configuration of one or more DSP blocks 26 on the integrated circuit device 12. The DSP block 26 may include circuitry to implement, for example, operations to perform matrix-matrix or matrix-vector multiplication for AI or non-AI data processing. The integrated circuit device 12 may include many (e.g., hundreds or thousands) of the DSP blocks 26. Additionally, DSP blocks 26 may be communicatively coupled to another such that data outputted from one DSP block 26 may be provided to other DSP blocks 26.

While the techniques above discussion described to the application of a high-level program, in some embodiments, the designer may use the design software 14 to generate and/or to specify a low-level program, such as the low-level hardware description languages described above. Further, in some embodiments, the system 10 may be implemented without a separate host program 22. Moreover, in some embodiments, the techniques described herein may be implemented in circuitry as a non-programmable circuit design. Thus, embodiments described herein are intended to be illustrative and not limiting.

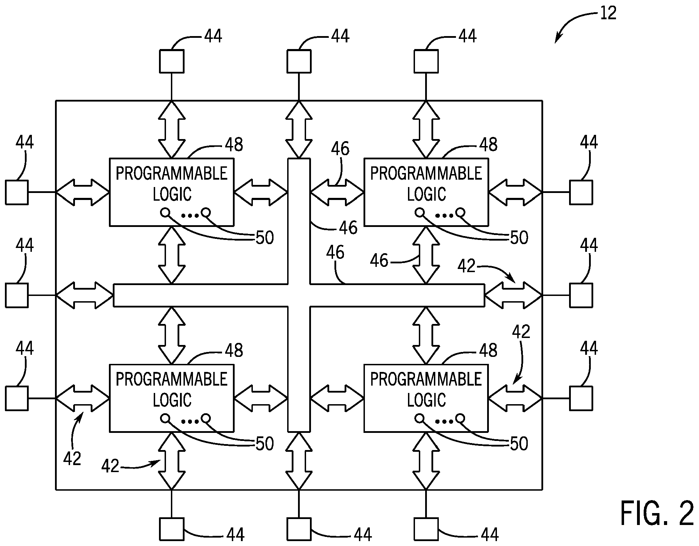

Turning now to a more detailed discussion of the integrated circuit device 12, FIG. 2 illustrates an example of the integrated circuit device 12 as a programmable logic device, such as a field-programmable gate array (FPGA). Further, it should be understood that the integrated circuit device 12 may be any other suitable type of integrated circuit device (e.g., an application-specific integrated circuit and/or application-specific standard product). As shown, the integrated circuit device 12 may have input/output circuitry 42 for driving signals off device and for receiving signals from other devices via input/output pins 44. Interconnection resources 46, such as global and local vertical and horizontal conductive lines and buses, may be used to route signals on integrated circuit device 12. Additionally, interconnection resources 46 may include fixed interconnects (conductive lines) and programmable interconnects (e.g., programmable connections between respective fixed interconnects). Programmable logic 48 may include combinational and sequential logic circuitry. For example, programmable logic 48 may include look-up tables, registers, and multiplexers. In various embodiments, the programmable logic 48 may be configured to perform a custom logic function. The programmable interconnects associated with interconnection resources may be considered to be a part of the programmable logic 48.

Programmable logic devices, such as integrated circuit device 12, may contain programmable elements 50 within the programmable logic 48. For example, as discussed above, a designer (e.g., a customer) may program (e.g., configure) the programmable logic 48 to perform one or more desired functions. By way of example, some programmable logic devices may be programmed by configuring their programmable elements 50 using mask programming arrangements, which is performed during semiconductor manufacturing. Other programmable logic devices are configured after semiconductor fabrication operations have been completed, such as by using electrical programming or laser programming to program their programmable elements 50. In general, programmable elements 50 may be based on any suitable programmable technology, such as fuses, antifuses, electrically-programmable read-only-memory technology, random-access memory cells, mask-programmed elements, and so forth.

Many programmable logic devices are electrically programmed. With electrical programming arrangements, the programmable elements 50 may be formed from one or more memory cells. For example, during programming, configuration data is loaded into the memory cells using pins 44 and input/output circuitry 42. In one embodiment, the memory cells may be implemented as random-access-memory (RAM) cells. The use of memory cells based on RAM technology is described herein is intended to be only one example. Further, because these RAM cells are loaded with configuration data during programming, they are sometimes referred to as configuration RAM cells (CRAM). These memory cells may each provide a corresponding static control output signal that controls the state of an associated logic component in programmable logic 48. For instance, in some embodiments, the output signals may be applied to the gates of metal-oxide-semiconductor (MOS) transistors within the programmable logic 48.

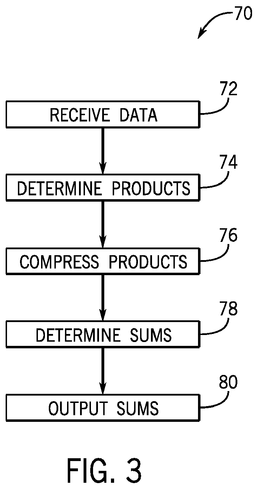

Keeping the foregoing in mind, the DSP block 26 discussed here may be used for a variety of applications and to perform many different operations associated with the applications, such as multiplication and addition. For example, matrix and vector (e.g., matrix-matrix, matrix-vector, vector-vector) multiplication operations may be well suited for both AI and digital signal processing applications. As discussed below, the DSP block 26 may simultaneously calculate many products (e.g., dot products) by multiplying one or more rows of data by one or more columns of data. Before describing circuitry of the DSP block 26, to help provide an overview for the operations that the DSP block 26 may perform, FIG. 3 is provided. In particular, FIG. 3 is a flow diagram of a process 70 that the DSP block 26 may perform, for example, on data the DSP block 26 receives to determine the product of the inputted data. Additionally, it should be noted the operations described with respect to the process 70 are discussed in greater detail with respect to subsequent drawings.

At process block 72, the DSP block 26 receives data. The data may include values that will be multiplied. The data may include fixed-point and floating-point data types. In some embodiments, the data may be fixed-point data types that share a common exponent. Additionally, the data may be floating-point values that have been converted for fixed-point values (e.g., fixed-point values that share a common exponent). As described in more detail below with regard to circuitry included in the DSP block 26, the inputs may include data that will be stored in weight registers included in the DSP block 26 as well as values that are going to be multiplied by the values stored in the weight registers.

At process block 74, the DSP block 26 may multiply the received data (e.g., a portion of the data) to generate products. For example, the products may be subset products (e.g., products determined as part of determining one or more partial products in a matrix multiplication operation) associated with several columns of data being multiplied by data that the DSP block 26 receives. For instance, when multiplying two matrices, values of a row of one matrix may be multiplied by values of a column of the other matrix to generate the subset products.

At process block 76, the DSP block 26 may compress the products to generate vectors. For example, as described in more detail below, several stages of compression may be used to generate vectors that the DSP block 26 sums.

At process block 78, the DSP block 26 may determine the sums of the compressed data. For example, for subset products of a column of data that have been compressed (e.g., into fewer vectors than there were subset products), the sum of the subset products may be determined using adding circuitry (e.g., one or more adders, accumulators, etc.) of the DSP block 26. Sums may be determined for each column (or row) of data, which as discussed below, correspond to columns (and rows) of registers within the DSP block 26. Additionally, it should be noted that, in some embodiments, the DSP block 26 may convert fixed-point values to floating-point values before determining the sums at process block 78.

At process block 80, the DSP block 26 may output the determined sums. As discussed below, in some embodiments, the outputs may be provided to another DSP block 26 that is chained to the DSP block 26.

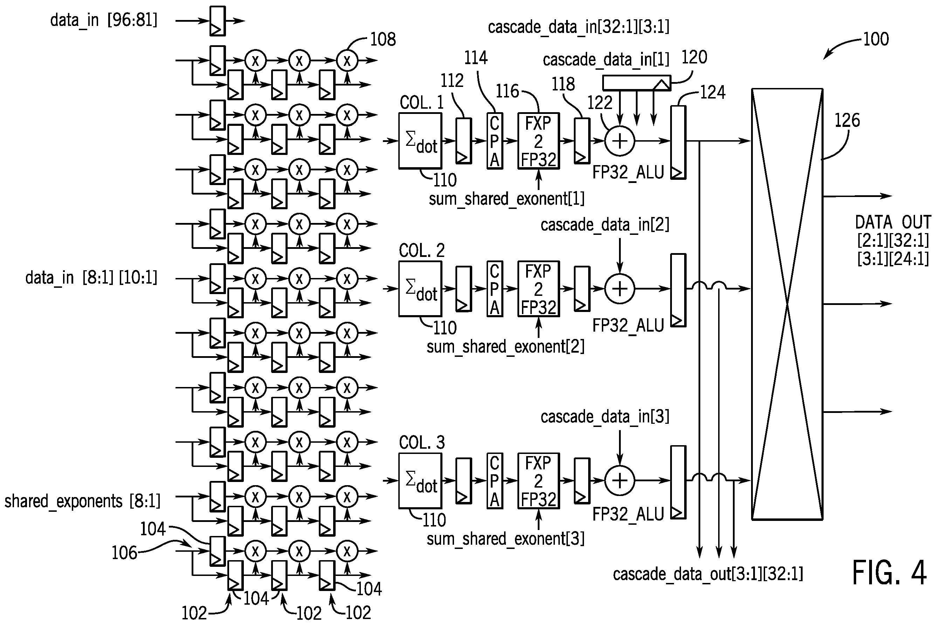

Keeping the discussion of FIG. 3 in mind, FIG. 4 is a block diagram illustrating a virtual bandwidth expansion structure 100 implemented using the DSP block 26. The virtual bandwidth expansion structure 100 includes columns 102 of registers 104 that may store data values the DSP block 26 receives. For example, the data received may be fixed-point values, such as four-bit or eight-bit integer values. In other embodiments, the received data may be fixed-point values having one to eight integer bits, or more than eight integer bits. Additionally, the data received may include a shared exponent in which case the received data may be considered as floating-point values. While three columns 102 are illustrated, in other embodiments, there may be fewer than three columns 102 or more than three columns 102. The registers 104 of the columns 102 may be used to store data values associated with a particular portion of data received by the DSP block 26. For example, each column 102 may include data corresponding to a particular column of a matrix when performing matrix multiplication operations. As discussed in more detail below, data may be preloaded into the columns 102, and the data can be used to perform multiple multiplication operations simultaneously. For example, data received by the DSP block 26 corresponding to rows 106 (e.g., registers 104) may be multiplied (using multipliers 108) by values stored in the columns 102. More specifically, in the illustrated embodiment, ten rows of data can be received and simultaneously multiplied with data in three columns 102, signifying that thirty products (e.g., subset products) can be calculated. It should be understood that nay suitable number of rows of data may be received and any number of the multipliers 108 (e.g., 8, 9, 10) may be implemented to calculated a desired amount of products.

For example, when performing matrix-matrix multiplication, the same row(s) or column(s) is/are may be applied to multiple vectors of the other dimension by multiplying received data values by data values stored in the registers 104 of the columns 102. That is, multiple vectors of one of the dimensions of a matrix can be preloaded (e.g., stored in the registers 104 of the columns 102), and vectors from the other dimension are streamed through the DSP block 26 to be multiplied with the preloaded values. Registers 104 that are used to store preloaded values may be referred to as "weight registers." Accordingly, in the illustrated embodiment that has three columns 102, up to three independent dot products can be determined simultaneously for each input (e.g., each row 106 of data). Additionally, when the DSP block 26 is using sparsity mode, each column 102 may be decomposed into a fracturable column with two or more segments that may result in six independent (dot) products being determined simultaneously for each input of each of the three fracturable columns. As discussed below, these features may be used to multiply values while implementing sparsity operations. Further, as noted above, the DSP block 26 may also receive data (e.g., eight bits of data) for the shared exponent of the data being received and may provide data specifying a specific multiplexer control pattern associated with a specific multiplexer network when the DSP block is operating in sparsity mode. This enables received data to be routed to the corresponding cascaded data values for multiplication during the sparsity mode operations of the DSP block 26.

The partial products for each column 102 may be compressed, as indicated by the compression blocks 110 to generate one or more vectors (e.g., represented by registers 112), which can be added via carry-propagate adders 114 to generate one or more values. Fixed-point to floating-point conversion circuitry 116 may convert the values to a floating-point format, such as a single-precision floating point value (e.g., FP32) as provided by IEEE Standard 754, to generate a floating-point value (represented by register 118). Additionally, multiplexer network circuitry and routing circuitry may also be implemented as desired across the DSP block 26 to correspond to sparsity ratios during sparsity mode operations performed by each column 102.

The DSP block 26 may be communicatively coupled to other DSP blocks 26 such that the DSP block 26 may receive data from, and provide data to, other DSP blocks 26. For example, the DSP block 26 may receive data from another DSP block 26, as indicated by cascade register 120, which may include data that will be added (e.g., via adder 122) to generate a value (represented by register 124). Values may be provided to a multiplexer selection circuitry 126, which selects values, or subsets of values, to be output out of the DSP block 26 (e.g., to circuitry that may determine a sum for each column 102 of data based on the received data values.) The outputs of the multiplexer selection circuitry 126 may be floating-point values, such as FP32 values or floating-point values in other formats such as bfloat24 format (e.g., a value having one sign bit, eight exponent bits, and sixteen implicit (fifteen explicit) mantissa bits), bfloat16 format (e.g., a value having one sign bit, eight exponent bits, and seven explicit mantissa bits), bfloat20 format (e.g., a value having one sign bit, eight exponent bits, and eleven explicit mantissa bits), or any suitable format. Each of the tensor columns 102 may be subdivided into two or more sub-tensor columns and use the multipliers 108 to produce two values (e.g., products or partial products) that may each be added (e.g., via two adders 122) with streamed values to generate two values that may be streamed to another DSP block 26. This may result in six output values being cascaded out of each DSP block 26 to a subsequent DSP block 26 (e.g., when operating in a sparsity mode). This may enable the DSP block 26 to expand sparsity mode operations for large number calculations, while using minimal routing resources. Furthermore, while six output values are described as being cascaded from one DSP block 26 to another, a different mount of values may be cascaded depending on the mode of operation of the DSP block 26 as well as a type of the values (e.g., FP32 values or bfloat24 values) to be cascaded.

As discussed above, it may be beneficial for a DSP block 26 that extends AI tensor processing to also enable performance of sparsity mode operations. This may include the ability of the DSP block 26 to perform sparsity mode operations corresponding to different sparsity ratios by configuring the tensor circuitry to implement specific multiplexer patterns based on the sparsity ratios to ensure input values are multiplexed down to eliminate zeros. This enables the DSP block 26 to perform calculations on non-zero values instead of expending processing power on the zero values. Additionally, the ability to implement sparsity mode operations using multiplexer control network operations enables the DSP block 26 to reduce the amount of routing resources used for the sparsity calculations. Thus, the ability of the DSP block 26 to configure for different sparsity ratios via multiplexer control networks and routing networks increases the efficiency of the DSP block 26.

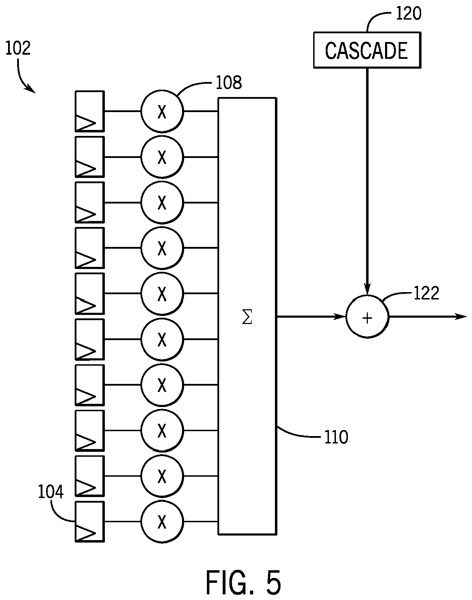

With the foregoing in mind FIG. 5 is a block diagram of a single tensor column 102 within the DSP block 26 according to an embodiment of the present disclosure. The single tensor column 102 may be reconfigurable to perform sparsity mode operations corresponding to multiple sparsity ratios. The single tensor column 102 may be divided into two or more sub-columns that may operate to product two different dot products that may be streamed into one or more additional DSP blocks 26 during sparsity operations.

The single tensor column 102 may include weight registers 104 that may be used to store data values associated with a particular portion of data received by the DSP block 26, as discussed above. For example, each column 102 may include data corresponding to a particular column of a matrix when performing matrix multiplication operations. The data may be preloaded into weight registers 104 of the columns 102, and the data may be used to perform multiple multiplication operations simultaneously. For example, data received by the DSP block 26 corresponding to rows 106 (e.g., registers 104) may be multiplied (using multipliers 108) by values stored in the columns 102. In some embodiments, the single tensor column 102 may be fracturable into two or more sub-columns to perform sparsity operations, and perform multiple multiplication operations simultaneously that result in two separate (dot) product outputs from the single tensor columns 102. The partial products for each column 102 may be compressed, as indicated by the compression blocks 110 to generate one or more vectors (e.g., represented by registers 112 in FIG. 4), which can be added to generate one or more values.

The adder 122 of the tensor column 102 may add the (dot) product or subproduct generated by the multiplications with one or more values streamed into the DSP block 26 via the cascade register 120. When the DSP block 26 is configured for sparsity mode, the cascade register 120 may stream in up to six values that can be used via an additional adder to produce additions for the two sub-columns of the tensor column 102. The cascade register 120 may also stream in indicators corresponding to multiplexer pattern configuration based on the sparsity ratio of the compressed data (e.g., data with zeros removed) streamed into the DSP block 26. This is to ensure adder operations may be performed according to the sparsity ratio of the received data. The tensor column 102 may also include one or more routing networks and/or multiplexer networks located between the registers 104 and multipliers 108 that may enable the values stored in the registers to be streamed to one more locations depending on the sparsity scheme (e.g., 2:4, 4:8) of the calculations.

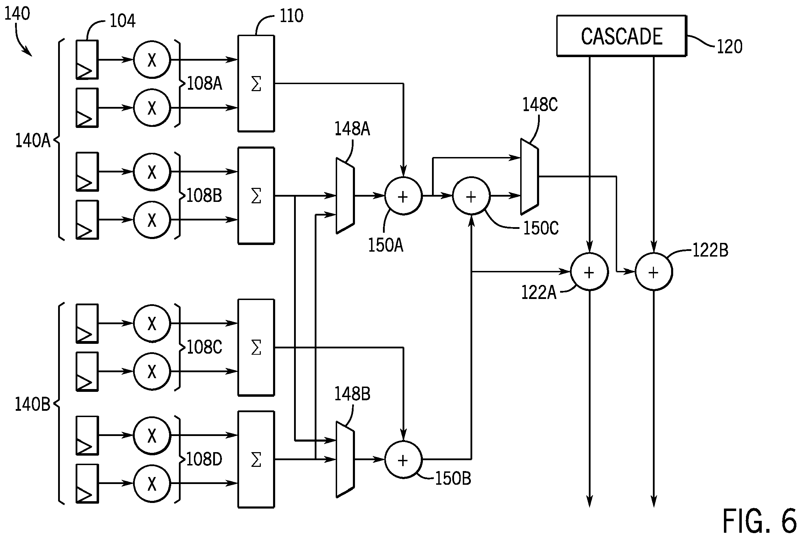

With the foregoing in mind, FIG. 6 is a block diagram of a fracturable tensor column 140 in accordance with embodiments of the present disclosure. The one or more tensor columns 102 of the DSP block may be fracturable tensor columns 140, for instance, when the DSP block 26 is configured for sparsity mode. The fracturable tensor column 140 may produce two separate sums that may be streamed out of the DSP block 26. The fracturable tensor column 140 may include a more complex dot product structure corresponding to sparsity operations. In this embodiment, eight multipliers 108 (e.g., pairs of multipliers 108A-108D) may be present in the fracturable tensor column 140, but it should be understood that many different decompositions and different number of multipliers 108 may be implemented when using the fracturable tensor column 140 in sparsity mode.

The multipliers 108 of the fracturable tensor column 140 may be grouped into multiplier pairs 108A, 108B, 108C, 108D, and may each be sent to a corresponding one of the compression blocks 110 to generate one or more vector products, which may be added via one or more adders 150A, 150B, 150C (e.g., carry-propagate adders) to generate one or more values. The routing network that may route the vector sum outputs to or using one or more multiplexers 148 (e.g., multiplexers 148A, 148B, 148C) and/or to adders 150 (and adders 122) to enable vector sum outputs of the multiplier pairs 108A, 108B, 108C, 108D to be redirected within the routing network based on the sparsity ratio of the cascaded data. For example, the vector sum output of the second multiplier pair 108B may be routed a first adder 150B to be added together with the output of the first multiplier pair 108A (using adders 150A). Additionally, the second multiplier pair 108B may be added together with the third multiplier pair 108C, via the second adder 150B. This enables activations streamed in through the registers 104 to be routed to the corresponding data from the cascaded data 120 and to be added via the cascade adders 122A, 122B based on the sparsity ratio of the data.

Each multiplier pair 108A, 108B, 108C, 108D may be combined to result in a single multiplier (dot) product or two pairs of (two) multiplier dot products. For example, the two multiplier (dot) products may support 2:4 sparsity operations by themselves, and alternate multiplier pairs 108A, 108B, 108C, 108D may be added together to make a larger cascade output chain. The larger cascade output chain may then be cascaded to the previous DSP blocks 26 cascade output chain to enable larger sparse dot products. In some embodiments, 50% sparsity may be used, in which case twice as many cascade chains may be used relative to existing dense tensors (e.g., when not operating in a sparsity mode).

As discussed above, the product output of each of the multiplier pairs 108A, 108B, 108C, 108D may each be sent to a corresponding compression block 110, to enable the compression of each of the dot product outputs. The compression blocks 110 may include one or more adders that may output a sum of received values. The compressed (dot) product output for each multiplier pair may then be routed through multiple multiplexer networks 148A, 148B, 148C and carry-propagate adders 150A, 150B, 150C. For example, the compressed dot product output of the second multiplier pair 108B and the compressed dot product output of the fourth multiplier pair 108D may be routed to a first multiplexer 148A and a second multiplexer 148B of the multiplexer network, either of which may output the output of the compression block 110 corresponding to multiplier pair 108B (e.g., depending on multiplexer control instructions received by the multiplexers 148, which may be included in the cascaded data).

The output of the first multiplexer 148A and the compressed dot product output of the first multiplier pair 108A may be routed to a first adder 150A, and the output of the second multiplexer 148B and the compressed dot product output of the third multiplier pair 108C may be routed to a second adder 150B. The output of the first adder 150A and the output of the second adder 150B may be routed to a third adder 150C. The output of the first adder 150A and the output of the third adder 150C may also be routed to the input of the third multiplexer 148C. This enables multiple multiplexer networks to select multiplier pairs 108A, 108B, 108C, 108D vector sum outputs dynamically.

The first cascade adder 122A then adds the output of the second adder 150B and data streamed into the DSP block from the cascade register 120 (e.g., a value generated from a preceding DSP block 26 in a column of DSP blocks). The output of the first cascade adder 122A is streamed into a subsequent DSP block (e.g., into a fracturable tensor column 140 of another DSP block 26 in the column of DSP blocks). The second cascade adder 122B receives the output of the third multiplexer 148C and data streamed into the DSP block from the cascade register 120. The output of the second cascade adder 122B may also be streamed into the subsequent DSP block in the column of DSP block. Thus, because the multiplexer network (e.g., multiplexers 148A, 148B, 148C) are able to rout products generated by the multipliers 108, 2:4 sparsity operations may be conducted with minimal routing resources.

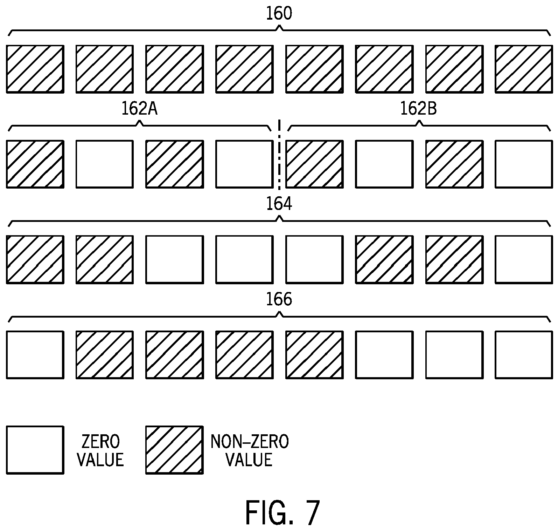

With the foregoing in mind, FIG. 7 is an example of sparsity ratios that may be implemented within the fracturable tensor column 140 described above in FIG. 6 (and other embodiments discussed herein), in accordance with embodiments of the present disclosure. The fracturable tensor column 140 may able implement multiple sparsity ratios by using matrix mappings and vector mappings to separate the dimensionality of the sparsity operations, and enable sparsity operations to be performed while greatly reducing the physical routing for the sparsity operations.

In some embodiments, the DSP block 26 may perform calculations without sparsity operations. For example, a first row 160 may represent a regular vector with no sparsity (e.g., no non-zero values). Each box of the first row 160 may correspond to the weight register 104 of the fracturable tensor column 140. Since each weight register 104 corresponds to a non-zero value, eight multipliers 108 are used to support eight activations for each non-zero value.

In another embodiment, a 2:4 sparsity ratio may be implemented by the fracturable tensor column 140. For example, the fracturable tensor column 140 may be represented by a row divided into a first row segment 162A and a second row segment 162B that each represents four weight registers 104 of the fracturable tensor column 140. The first row segment 162A and the second row segment 162B correspond to the 2:4 sparsity ratio, because each row has two zero values and two non-zero values corresponding to each set of four weight registers 104. For each row segment 162A, 162B two active multipliers 108 will be implemented to correspond to the two non-zero values in each of the rows.

The third row 164 may corresponds to a 4:8 sparsity ratio, including a single row of eight values with four non-zero values and four zero-values. Alternatively, the third row 164 may correspond to a 2:4 sparsity ratio. In this example, the location of the non-zero weights may be different than the second row 2:4 sparsity example. For example, in the third row, the first two weight registers may correspond to non-zero values, and the last two weight registers may correspond to zero-values. Additionally, the fifth weight register may correspond to a zero-value, the next subsequent registers may correspond to non-zero values, and the last weight register may correspond to a zero value. Since the third row 164 corresponds to four zero values, and four non-zero values, the sparsity ratio is 4:8, and four active multipliers 108 will be implemented to correspond to the four non-zero values in each of the row as discussed above.

Further, the fourth row 166 may correspond to 4:8 sparsity, the same ratio as the second row and the third row, but the ratio is spread unevenly across the entire vector. The fourth row 166 may not have an even ratio across the vector, and the number of zeros does not correspond to an even ratio based on the location of the zeros within the fourth row 166. The fourth row 166 may need additional multiplexer network resources when streamed into the fracturable tensor column 140 described above in FIG. 6. The ability of the multiplexer network resources to support both 2:4 and 4:8 sparsity operations may enable more flexibility in retraining of the network to introduce sparsity.

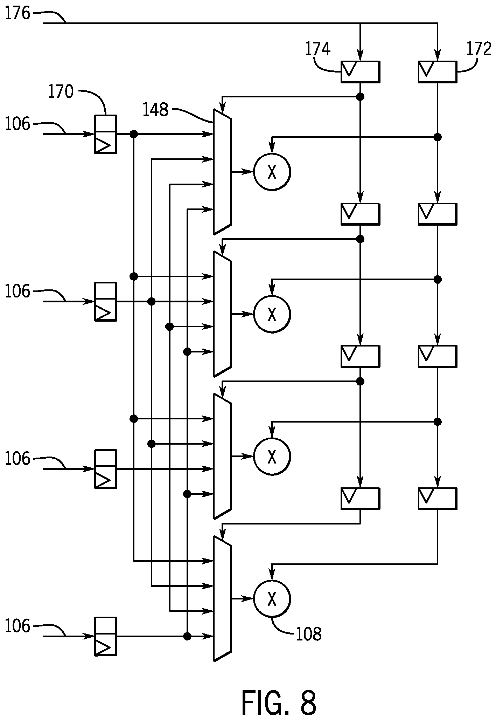

With the foregoing in mind, FIG. 8, is an example of multiplexer network control for sparsity operations in the fracturable tensor column 140 of the DSP block 26, in accordance with an embodiment. The fracturable tensor column 140 may implement a multiplexer control network (using multiplexers 148) to route inputs from multiple first column registers 104 when performing sparsity operations. In particular, the circuitry illustrated in FIG. 8 may be used for 2:4 sparsity operations.

For example, activations 106 corresponding to each of the first column registers 170 may be streamed simultaneously for each input (e.g., each row 106 of data) through the first column registers 170. The multiplexers 148 of the multiplexer network may then select the first column register 170 that contains the activations 106 corresponding to the densely packed (e.g., zeros removed) weights in the second column registers 172, which are streamed into the multiple multiplexers 148. Thus, any activation 106 may be provided to any of the multipliers 108. For instance, the activations 106 in each first column register 170 may be used as inputs for each of the multiplexers 148 via the routing network. The multipliers 108 may multiply each of the activations 106 selected by the multiplexers 148 by a corresponding value stored in one of the second column registers 172. The second column registers 172 may be weight registers 104 that are used to store preloaded values. The outputs of the multipliers 108 may subsequently be routed to multiple compressor blocks (e.g., compressor blocks 110 of FIG. 5 or FIG. 6) to compresses the output of each of the multipliers 108 to vector values, and the vector values are then routed to one or more adders 122 to add the vector values to cascaded values (e.g., values provided by a preceding DSP block 26 in a column of DSP blocks).

Further, each of the multiplexers 148 may receive input values from each of a control register 174 in addition to the activation 106 input. The control registers 174 may contain information that includes multiplexer patterns for each multiplexer 148 of the multiplexer network, and specifies the location of zeros within the input values of the second column registers 172. For example, the control registers 174 may include information that corresponds to the position of the zeros within the compressed values of the second column registers 172. This information may enable the multiplexers 148 to perform sparsity operations according to the placement of the zero's within the input values.

The control registers 174 may be loaded by a same port 176 used to load the second column registers 172, or may be loaded using a different port. Thus, the control registers 174 and the second column registers 172 may be loaded independently of the other. For example, an external signaling bit may be set to load the control registers 174, the second column registers 172, or both. Alternatively, the control registers 174 and the second column registers 172 may be loaded in a sequential order. For example, all of the control registers 174 may be loaded first, before the loading of the second column registers 172 initiates the loading. To implement the sequential order loading, the second column registers 172 may be sequentially connected from the control registers 174 to the second column registers 172. In some embodiments, the control registers 174 and second column registers 172 may be use a parallel connection to the input port 176.

Additionally, the control registers 174 may correspond to a smaller bit width that may be less than a bit width of the second column registers 172. For example, the second column registers 172 may correspond to a bit width of eight bits. In other embodiments, the second column registers 172 may be virtually or physically decomposed into two four-bit wide banks, which may be used for four bit multiplications in some inferencing applications. In the case of a 2:4 sparsity operation, the control registers 174 may correspond to a bit-width of two. In this case, multiple control registers 174 may be loaded using a single clock control, which may increase the loading speed of the control registers 174 to a faster speed than the second column register 172 loading speed. For example, if the second column registers 172 correspond to a bit width of eight, and there are four registers fed by a single input port, it may take four clock cycles to load the second column register 172. In the case of the control registers 174 corresponding to a bit-width of two, it may only take a single clock cycle to load the control registers 174.

In some embodiments, multiple banks of control registers 174 and the second column registers 172 may be implemented. One of the multiple banks of control registers 174 may be loaded while the other is used for processing. Further the multiple banks of control registers 174 may be switched from loading to processing by a single external control signal that may be input to each of the banks. This may enable further reconfigurability during sparsity operations with the DSP block 26.

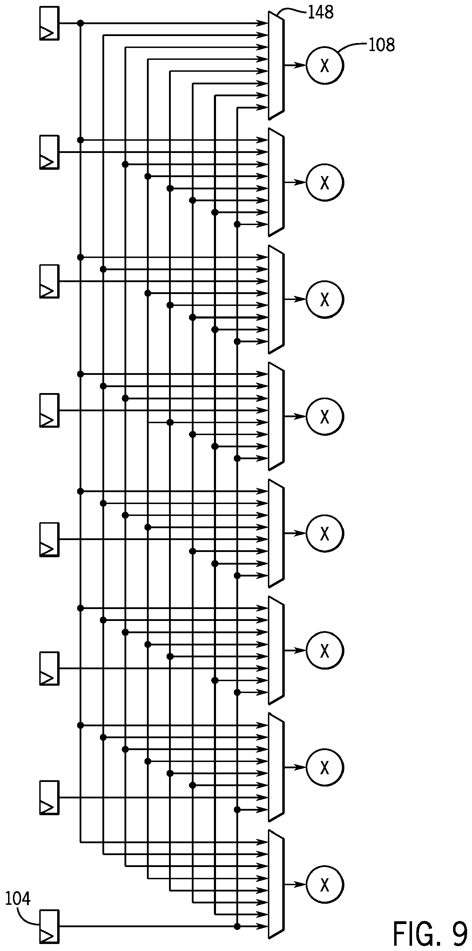

Keeping the foregoing in mind, FIG. 9 is a schematic diagram of crossbar wiring structure (which may also be referred to as a "multiplexer network") to support a 4:8 sparsity multiplexer structure, in accordance with the current embodiments. The 4:8 sparsity multiplexer structure may have more wiring and routing than the 2:4 sparsity multiplexer structure discussed above in FIG. 8. This is because the placement of the zeros may be within any of the register inputs 104, instead of an even ratio within each half of the register inputs 104. Each value of the registers 104 may be streamed to each of the multiplexers 148 to enable the 4:8 sparsity scheme to be performed. The output of the multiplexers 148 are then sent to each of eight multipliers 108 corresponding to each register 104 for further processing. The crossbar wiring structure enables each register to be connected to each multiplier 108 to enable activations to be streamed to any of the multipliers 108 based on the zero placement in the compressed values streamed into the fracturable tensor column 140.

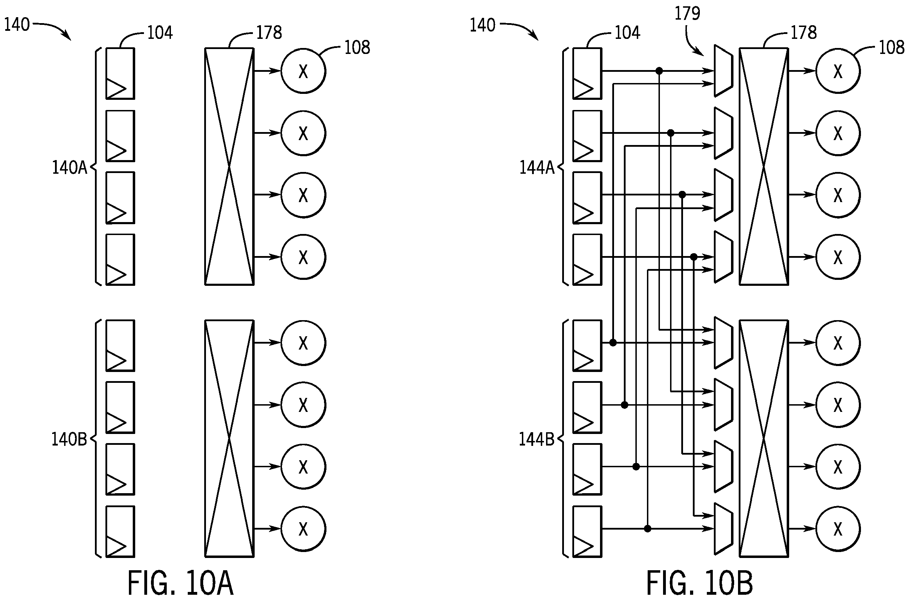

With the foregoing in mind, FIG. 10A is a schematic diagram of a 2:4 sparsity ratio crossbar structure implemented with two pairs of four multipliers, in accordance with a current embodiment. The 2:4 sparsity multiplexer structure of FIG. 10A may be implemented with two sets of four multipliers that may make up the first half of the fracturable tensor column 140A corresponding to four multipliers and the second half of the fracturable tensor column 140B corresponding to four multipliers 108. Multiplexer networks 178, which may include multiplexers 148 of FIG. 8, may route inputs to the multipliers 108. This may enable the four multipliers 108 in each half of the fracturable tensor column 140A, 140B to perform sparsity operations for the 2:4 sparsity ratio.

As discussed above, the DSP block 26 may also be configured to perform 4:8 sparsity ratio operations. With the foregoing in mind, FIG. 10B is a schematic diagram of the fracturable tensor column 140 in which the multiplexer networks 178 are each preceded by an additional 2:1 ratio multiplexer network 179, in accordance with the present embodiments. The fracturable tensor column 140 (which includes halves 144A, 144B) may be configurable to support both 2:4 sparsity ratios and 4:8 sparsity ratio operations. In some embodiments, the fracturable tensor column 140 may include the additional 2:1 multiplexer networks 179 before the multiplexer network (as represented by multiplexer networks 178) that streams into the multipliers 108 of the column. Thus, the fracturable tensor column 140 that includes the halves 144A, 144B may support all combinations of the 4:8 sparsity as well as the 2:4 sparsity operations discussed herein.

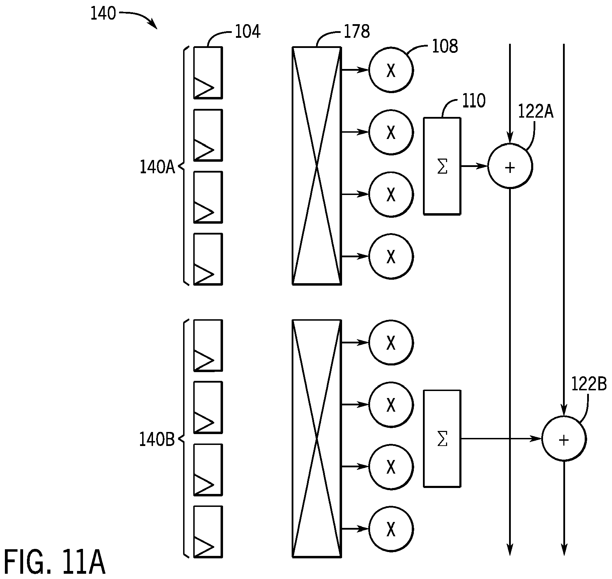

With the foregoing in mind, FIG. 11A is a schematic diagram of 2:4 sparsity vector output from the first half of the fracturable tensor column 140A and the second half of the fracturable tensor column 140B, in accordance with present embodiments. The outputs of the multipliers 108 for each half of the fracturable tensor column 140 (as indicated by columns 140A, 140B) may be compressed by compression blocks 110 into vector product outputs. In 2:4 sparsity mode of the fracturable tensor column 140, each pair of multipliers 108A, 108B, 108C, 108D is paired with the same rank pair in the other four element (dot) products. This results in two vector outputs from each of the four multiplier 108 operations, which may be further compressed by the compression blocks 110 to generate one output for each of the fracturable tensor columns 140A, 140B. The vector output for the fracturable tensor column 140A and the vector output for the fracturable tensor column 140B may respectively be added via adder circuitry 122A, 122B to values cascaded from another DSP block 26. The output of the adder operations may be routed to two separate cascade paths to be provided to another DSP block 26. The multiplexer networks 178 may be controlled to implement eight element dot products (e.g., dense vectors), 2:4 sparsity operations as demonstrated in the current FIG. 11A, and 4:8 sparsity.

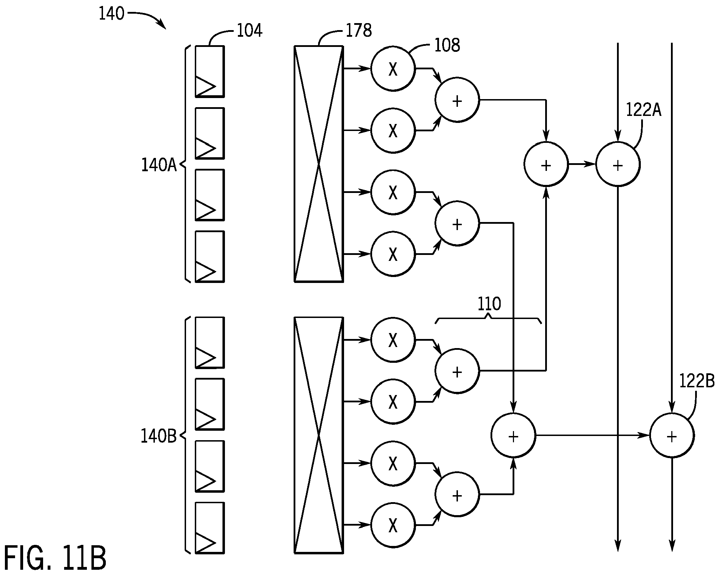

With the foregoing in mind FIG. 11B is a schematic diagram of the 2:4 sparsity ratio operation summation step, in accordance with present embodiments. The products for each pair of multipliers 108 may be added via a first level of adders of the compression blocks 110, which may generate sums that are added to another adder of the compression blocks 110, which may generate an output that may be streamed through the cascade paths as described in FIG. 6. In this way each pair of multipliers 108 (e.g., pairs of multipliers 108A, 108B, 108C, 108D as shown in FIG. 6) is paired with the same rank pair in the other four element dot product as discussed above.

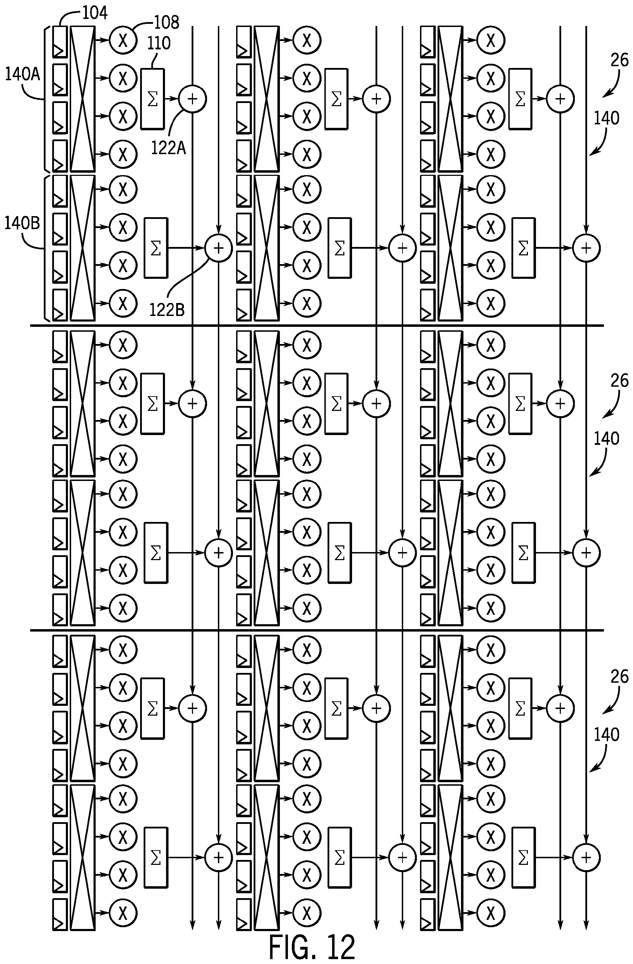

Continuing with the drawings, FIG. 12 is a schematic diagram of multiple cascaded DSP blocks 26 implementing the 2:4 sparsity mode, in accordance with current embodiments. In some embodiments, the DSP blocks 26 may output six cascaded lanes according to the two cascade outputs per each fracturable tensor column 140, when operating in 2:4 sparsity mode. Because each DSP block 26 may include three fracturable tensor columns 140, each DSP block 26 may cascade six outputs to another DSP blocks 26 to expand sparsity operations, which may enable larger number operations to be performed. The multiple cascaded DSP blocks 26 may also implement 4:8 sparsity mode, using the routing networks and multiplexer structure discussed above in FIG. 10B. It should be understood that any suitable number of DSP blocks 26 may be used to cascade outputs and enable larger value sparsity calculations.

In some cascade implementations, the number of cascade paths may put an increasing burden on routing circuitry and require multiple wires to accomplish the routing for multiple cascade paths. In some embodiments, to limit the number of wires needed for the multiple cascade paths, one or more values output from the multiplication operations may be converted to16b floating point values (e.g., bfloat16, bfloat24) to reduce routing resources needed for the cascade paths.

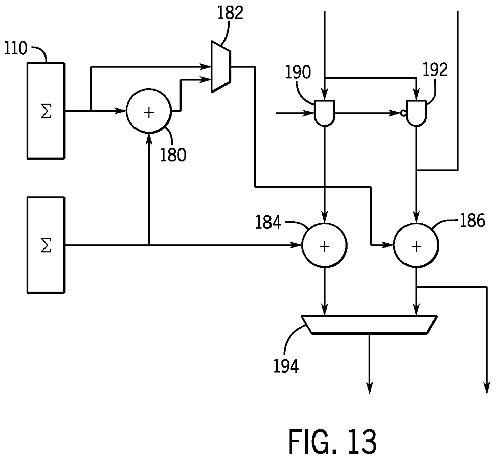

With the foregoing in mind, FIG. 13 is a schematic diagram of cascade multiplexing circuitry that may be during the six lane cascade mode (e.g., when a sparsity mode is being used) to convert multiplier 108 output values to sixteen-bit floating point values. Each fracturable tensor column 140 of the DSP block 26 may reconfigure one or more multiplier 108 compressed dot product values to a sixteen-bit floating point (e.g., bfloat16), to enable saving of routing resources. The DSP block 26 may implement cascade multiplexing to enable conversions of values to sixteen-bit floating point values when sparsity mode is enabled for the DSP block 26.

Each of the fracturable tensor columns 140 that may produce the cascaded values, such as demonstrated in FIG. 13, may output compressed dot product values into a cascade multiplexing network. The cascade multiplexing network may include a first adder 180 (e.g., a FP32 adder, which is also known as a single-precision floating point adder) that may add FP32 values. When the fracturable tensor columns 140 are operating without sparsity mode, the output of the compression block 110 for each half of the fracturable tensor columns 140A, 140B may be routed via the cascade multiplexer network to the first FP32 adder 180. The first FP32 adder 180 may then add the compressed values and route the values to a first multiplexer 182 along with input from the first compressed value. The output from the first multiplexer 182 may then be routed to an additional adder 186 to be added with a value (e.g., cascaded from a preceding DSP block 26 in a column of DSP blocks) to produce a cascaded output value.

When the fracturable tensor columns 140 are operating in sparsity mode, the fracturable tensor columns 140 may route one of the compressed (dot) product values to a bfloat16 adder 184 to convert the value into a bfloat16 format. For example, a compressed dot product output one of the sparse multiplier pairs may be converted into bfloat16 format, while the output of the other sparse multiplier pair may be converted to FP32 using existing FP32 conversion circuitry (e.g., as shown in FIG. 4) in the sparsity mode. The bfloat16 value may then be multiplexed via an additional multiplexer 194 into the lower 16-bits of the cascade bus, while the upper 16-bits of the cascade bus contains a subset of the FP32 value. This may convert the FP32 value to bfloat16 value, which is a smaller value than FP32. This may enable savings in routing resources during cascading operations, by implementing smaller bit values. In addition, one or more logic gates 190, 192 may be implemented at before the input of the cascade adders 184, 186, to enable control of inputs based on the sparsity mode of the DSP block 26. The one or more logic gates 190, 192 may receive the data cascaded in from one or more additional DSP blocks 26. While the examples of bfloat16 and FP32 values are provided above, it should be noted that these techniques may be implemented for any suitable type or size of value.

Although a 2:4 sparsity ratio may be implemented by the DSP blocks 26, this may not be the most scalable sparsity ratio. As discussed below, a twenty-five percent (25%) (e.g., 1:4) ratio or a forty percent (40%) (e.g., 2:5) ratio may also be achieved by the DSP block 26. For instance, the DSP block 26 may use shared inputs to enable a 40% sparse system across multiple columns of the DSP block 26. In some embodiments, the DSP block 26 may increase or decrease the number of multipliers 108 within the DSP block 26 and alter the multiplexer network 148 size to support a 5: 10 sparsity ratio, a 3:8 sparsity ratio, a 5:8 sparsity ratio, or any other suitable sparsity ratio. The DSP block 26 may also increase or decrease number of DSP blocks 26 that are cascaded and/or alter the multiplexer network 148 size to support a 5:10 sparsity ratio and a 3:6 sparsity ratio. It should be understood that different multiplexer arrangements may be used to implement a variety of different sparsity's (e.g., 25%, 33%, 40%, and 50%) depending on how many cascades are available for the DSP block 26, and the decompositions of tensor columns that are supported for the DSP block 26.

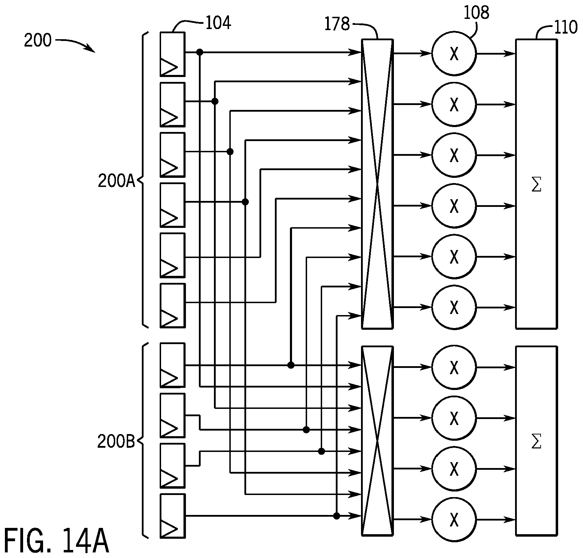

With the foregoing in mind, FIG. 14A is a schematic diagram of a crossbar pattern for implementing a 25% sparsity ratio for a first fracturable tensor column 200 of the DSP block 26, in accordance with an embodiment of the present disclosure. The first fracturable tensor column 200 may include 10 input registers 104 and ten multipliers 108, corresponding to two vector outputs. First activations 200A may be mapped to six of the ten multipliers 108. Second activations 200B may be mapped to the subset of ten multipliers 108 corresponding to the remaining four multipliers 108.

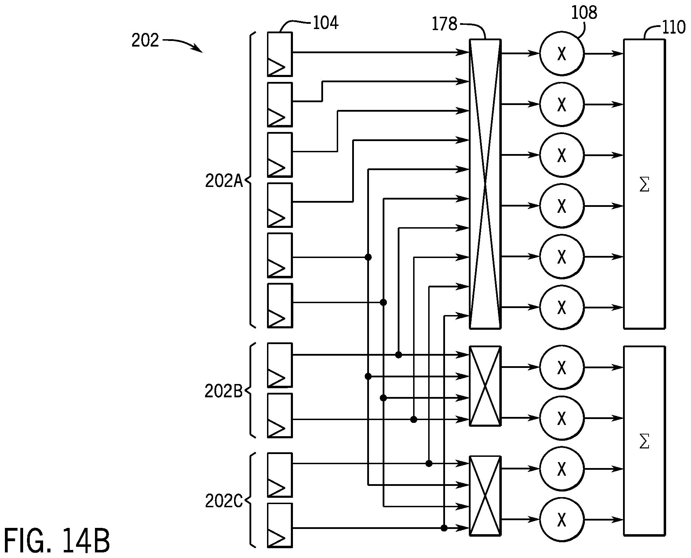

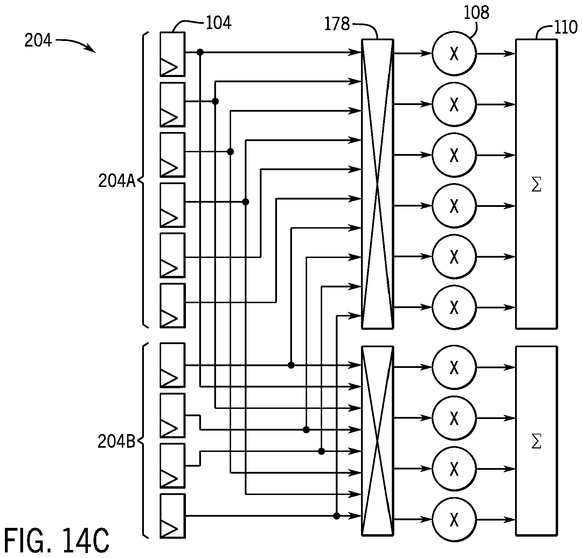

FIG. 14B is a schematic diagram of the crossbar pattern for implementing a 25% sparsity ratio for a second fracturable tensor column 202 of the DSP block 26, in accordance with an embodiment of the present disclosure. The second fracturable tensor column 200 may include three crossbars representing three multiplexer networks 178, as the lower four multipliers are split between the two sparse vector outputs. The first activations 202A may be streamed into a crossbar network that may route to six multiplier 108 outputs. The two smaller crossbars only need a subset of the input activations 202B, 202C in order to stream the activations to four multipliers 108 to assemble the vectors. The six high vectors each have access to all ten input values in their packed weights. Additionally, FIG. 14C may correspond to a third column of the DSP block 26, and may be designed the same as the first column of the DSP block 26 described in FIG. 14A, in accordance with an embodiment of the present disclosure. The third fracturable tensor column 204 may include ten input registers and ten multipliers 108, corresponding to two vector outputs. The first ten activations 204A may be mapped to six of the ten multipliers 108. The second activations 204B may be mapped to the subset of 10 multipliers corresponding to the remaining four multipliers 108.

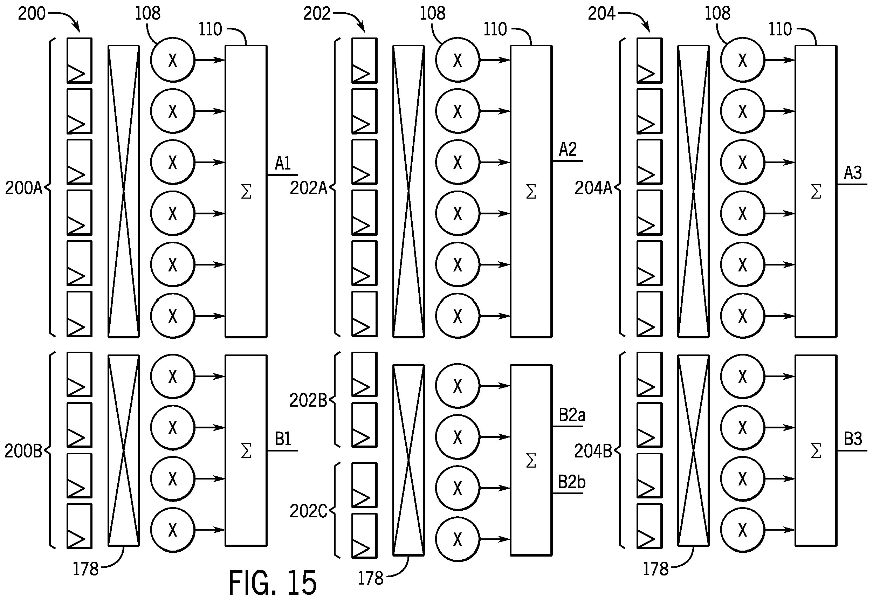

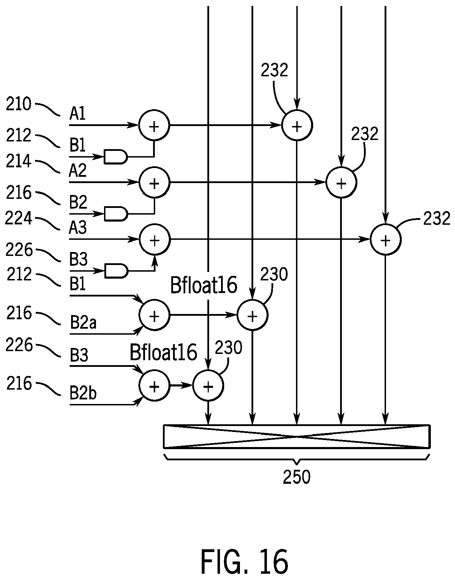

Turning the discussion to FIG. 15 and FIG. 16, FIG. 15 is a schematic diagram of the DSP block 26 implementing the three columns described above in FIGS.14A-C, in accordance with embodiments of the present disclosure. In the illustrated embodiment, the DSP block 26 may support up to five vector output columns 250. A first fracturable tensor column 200A may output two vector values 210, 212 (also labeled A1 and B1, respectively) when operating in 40% sparsity mode. The two output vector values 210, 212 may be streamed into routing circuitry that may route the output vector values to conversion circuitry that may convert the B 1 output value to bfloat16 value in 40% sparsity mode. Additionally, a third fracturable tensor column 204 may output two vector values 224, 226 (also labeled A3 and B3, respectively) when operating in 40% sparsity mode. The two output vector values 224, 226 may be streamed into routing circuitry that may route the output vector values to conversion circuitry that may convert the B3 output value to bfloat16 value.

Further, the second fracturable tensor column 202 may output three vector values 214, 216A, 216B (also labeled as A2, B2A, and B2B respectively) when operating in 40% sparsity mode. The three output vector values 214, 216A, 216B may be streamed into routing circuitry that may route the output vector values to conversion circuitry that may convert the B2A and B2B output values to bfloat16 values. This enables the DSP block 26 to implement 40% sparsity operations using ten multipliers 108 for each column, decompose each column into one or more sub-columns using multiple routing resources and multiplexer networks to support the sparsity operations, and route input data to the appropriate multiplier 108 associated with the correct activation.

FIG. 16 is an example of routing circuitry of the 40% sparsity operations of the DSP block 26, in accordance with embodiments of the present disclosure. In dense mode operations, three output columns that correspond to the FP32 adder 232 operations may be supported, and five columns may be supported when performing 40% sparsity operations. It should be understood that the existing interfaces should provide enough wires for the routing of the five outputs 250 when the DSP block is configured for sparsity operations.

During dense mode operations (e.g., non-sparsity operations) the input bfloat16 logic (e.g., 212, 216, 226) may be disabled via logic gates of the circuitry. In the dense mode operation, the DSP block 26 may only use the values 210, 214, 224, and use the three adders corresponding to the FP32 adders 232 to add the values 210, 214, 224 with values cascaded from another DSP block 26. The output of the three FP32 adders 232 may then be streamed into another DSP block 26.

In 40% sparsity mode, the DSP block 26 may support 40% sparsity and use the inputs 212, 216, 226A, 226B to implement two bfloat16 adders 230 to add the inputs 212, 216, 226A, 226B in combination with the three FP32 adders 232 to add the inputs 210, 214, 224 along with the inputs 212, 216, 226. This may enable five outputs 250 corresponding to the 40% sparsity calculations to be streamed into the one or more proceeding DSP blocks 26.

Before continuing, it should be noted that as the number of output ports corresponding to the DSP blocks 26 increases, it may be larger than the number of routable outputs to the general purpose fabric that can be supported. In this situation, multiple channels can be accumulated outside the block and cascaded into following blocks.

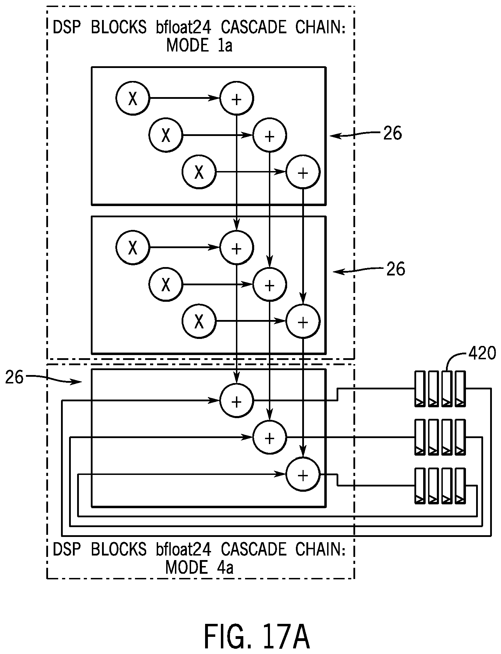

FIG. 17A is a schematic diagram of DSP block 26 cascade accumulation outside a DSP block 26, in accordance with an embodiment of the present disclosure. In some embodiments, the routing resources including output ports of the DSP block may increase in amount during sparsity operations, and may be larger than the number of routable outputs (to the general purpose fabric) that can be supported by the DSP block 26. In this case, multiple channels 420 that include the outputs may be accumulated outside the DSP block 26. If the routable outputs that are present in the DSP block 26 are not large enough to stream the data out of the DSP block 26, one or more of the cascaded outputs from the DSP block 26 may be accumulated outside the first block using the multiple channels 420 located outside the DSP block 26.

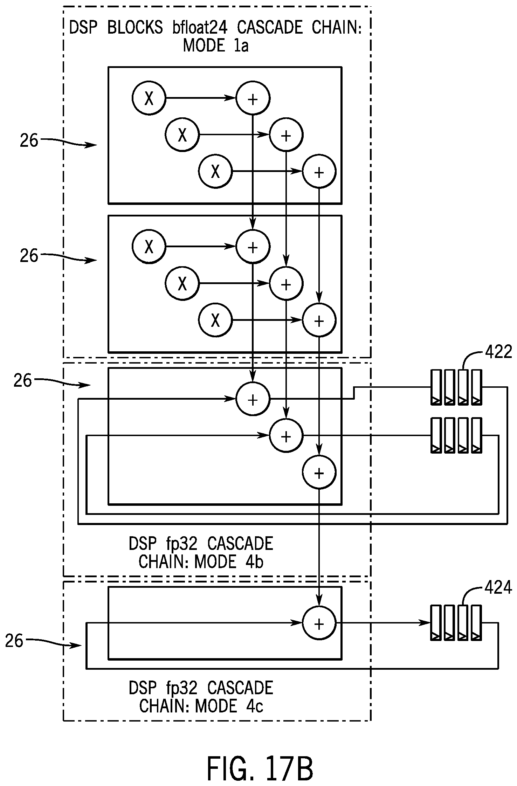

FIG. 17B is a schematic diagram of accumulation of a cascade outside multiple DSP blocks 26, in accordance with an embodiment of the present disclosure. The routing resources including routable outputs of the DSP block 26 may be unable to support all operations due to wiring resources. In this case, multiple additional channels 422, 424 corresponding to multiple DSP blocks 26 may be used for accumulation of cascade outputs outside the DSP block 26. In some embodiments, one or more DSP blocks 26 may not be able to support all cascade output operations. For example, a first DSP block 26 may need to accumulate data using multiple channels 422 outside the DSP block 26 that correspond to two of the cascade output values, but may be able to stream one of the cascade outputs directly to the proceeding DSP block 26 using current routing resources. The proceeding DSP block 26 may then accumulate the cascaded values outside the block using the additional channels 424. Further, the accumulation representation does not have to be the same as the cascade representation in terms of values. For example, bfloat16 values could be cascaded, but the FP24 and FP32 could be used for the accumulation, in order to preserve precision for large numbers of the accumulated values.

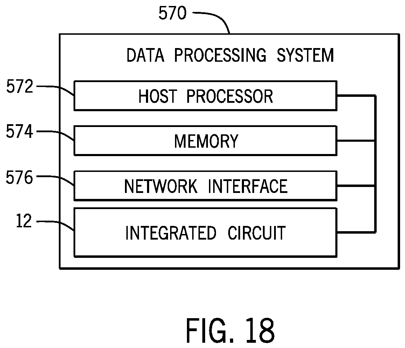

In addition to the sparsity operations discussed above, the integrated circuit device 12 may be a data processing system or a component included in a data processing system. For example, the integrated circuit device 12 may be a component of a data processing system 570, shown in FIG. 18. The data processing system 570 may include a host processor 572 (e.g., a central-processing unit (CPU)), memory and/or storage circuitry 574, and a network interface 576. The data processing system 570 may include more or fewer components (e.g., electronic display, user interface structures, application specific integrated circuits (ASICs)). The host processor 572 may include any suitable processor, such as an lNTEL^{®} Xeon^{®} processor or a reduced-instruction processor (e.g., a reduced instruction set computer (RISC), an Advanced RISC Machine (ARM) processor) that may manage a data processing request for the data processing system 570 (e.g., to perform encryption, decryption, machine learning, video processing, voice recognition, image recognition, data compression, database search ranking, bioinformatics, network security pattern identification, spatial navigation, or the like). The memory and/or storage circuitry 574 may include random access memory (RAM), read-only memory (ROM), one or more hard drives, flash memory, or the like. The memory and/or storage circuitry 574 may hold data to be processed by the data processing system 570. In some cases, the memory and/or storage circuitry 574 may also store configuration programs (bitstreams) for programming the integrated circuit device 12. The network interface 576 may allow the data processing system 570 to communicate with other electronic devices. The data processing system 570 may include several different packages or may be contained within a single package on a single package substrate. For example, components of the data processing system 570 may be located on several different packages at one location (e.g., a data center) or multiple locations. For instance, components of the data processing system 570 may be located in separate geographic locations or areas, such as cities, states, or countries.

In one example, the data processing system 570 may be part of a data center that processes a variety of different requests. For instance, the data processing system 570 may receive a data processing request via the network interface 576 to perform encryption, decryption, machine learning, video processing, voice recognition, image recognition, data compression, database search ranking, bioinformatics, network security pattern identification, spatial navigation, digital signal processing, or some other specialized task.

Furthermore, in some embodiments, the DSP block 26 and data processing system 570 may be virtualized. That is, one or more virtual machines may be used to implement a software-based representation of the DSP block 26 and data processing system 570 that emulates the functionalities of the DSP block 26 and data processing system 570 described herein. For example, a system (e.g., that includes one or more computing devices) may include a hypervisor that manages resources associated with one or more virtual machines and may allocate one or more virtual machines that emulate the DSP block 26 or data processing system 570 to perform multiplication operations and other operations described herein.

Accordingly, the techniques described herein enable particular applications to be carried out using the DSP block 26. For example, the DSP block 26 enhances the ability of integrated circuit devices, such as programmable logic devices (e.g., FPGAs), to be used for sparsity operations that may be used in machine-learning and artificial intelligence applications.

While the embodiments set forth in the present disclosure may be susceptible to various modifications and alternative forms, specific embodiments have been shown by way of example in the drawings and have been described in detail herein. However, it should be understood that the disclosure is not intended to be limited to the particular forms disclosed. The disclosure is to cover all modifications, equivalents, and alternatives falling within the spirit and scope of the disclosure as defined by the following appended claims.

The techniques presented and claimed herein are referenced and applied to material objects and concrete examples of a practical nature that demonstrably improve the present technical field and, as such, are not abstract, intangible, or purely theoretical. Further, if any claims appended to the end of this specification contain one or more elements designated as "means for [perform]ing [a function]..." or "step for [perform]ing [a function]...", it is intended that such elements are to be interpreted under 35 U.S.C. 112(f). However, for any claims containing elements designated in any other manner, it is intended that such elements are not to be interpreted under 35 U.S.C. 112(f).

### Example Embodiments of the Disclosure

The following numbered clauses define certain example embodiments of the present disclosure.

### CLAUSE 1

A digital signal processing (DSP) block comprising:
a plurality of weight registers configurable to receive and store a first plurality of values;
a plurality of multipliers, wherein each respective multiplier of the plurality of multipliers is configurable to receive a respective value of the first plurality of values;
one or more inputs configurable to receive a second plurality of values;
a multiplexer network configurable to receive the second plurality of values and route each respective value of the second plurality of values to a multiplier of the plurality of multipliers, wherein the plurality of multipliers is configurable to simultaneously multiply each value of the first plurality of values by a respective value of the second plurality of values to generate a plurality of products; and
adder circuitry configurable to generate a first sum and a second sum based on the plurality of products.

### CLAUSE 2.

The DSP block of clause 1, comprising a plurality of control registers configurable to store a third plurality of values, wherein:
the multiplexer network is configurable to receive the third plurality of values from the plurality of control registers; and
route the second plurality of values based on the third plurality of values.

### CLAUSE 3.

The DSP block of clause 2, wherein the third plurality of values is indicative of one or more locations of zeros in the first plurality of values.

### CLAUSE 4.

The DSP block of clause 1, comprising:
second adder circuitry configurable to receive a first product and a second product of the plurality of products and generate a third sum by adding the first product and the second product;
third adder circuitry configurable to receive a third product and a fourth product of the plurality of products and generate a fourth sum by adding the third product and the fourth product;
fourth adder circuitry configurable to receive a fifth product and a sixth product of the plurality of products and generate a fifth sum by adding the fifth product and the sixth product;
fifth adder circuitry configurable to receive a seventh product and eighth product of the plurality of products and generate a sixth sum by adding the seventh product and the eighth product;
a first multiplexer configurable to receive the fourth sum and the sixth sum and provide a first output to a first adder of the adder circuitry, wherein the first output comprises either the fourth sum or the sixth sum, wherein the first adder is configurable to generate a seventh sum by adding the third sum and the first output;
a second multiplexer configurable to receive the fourth sum and the sixth sum and provide a second output to a second adder of the adder circuitry, wherein the second output comprises either the fourth sum or the sixth sum, wherein the second adder is configurable to generate the first sum by adding the fifth sum and the second output;
a third adder of the adder circuitry configurable to receive the first sum and the seventh sum and generate am eighth sum by adding the first sum and the seventh sum; and
a third multiplexer configurable to receive the seventh sum and the eighth sum and selectively output the seventh sum of the eighth sum as the second sum.

### CLAUSE 5.

The DSP block of claim 4, comprising:
input circuitry configurable to receive a first value and a second value from a second DSP block;
a fourth adder configurable to receive the first sum and the first value and generate a ninth sum by adding the first sum and the first value;
a fifth adder configurable to receive the second sum and the second value and generate a tenth sum by adding the second sum and the second value; and
output circuitry configurable to output the ninth sum and the tenth sum from the DSP block to a third DSP block.

### CLAUSE 6.

The DSP block of clause 1, wherein:
in a first mode of operation of the DSP block:
   the plurality of multipliers is a first column of multipliers;
   the adder circuitry is configurable to generate the first sum by adding a first portion of the plurality of products generated by a first portion of the first column of multipliers; and
   the adder circuitry is configurable to generate the second sum by adding a second portion of the plurality of products generated by a second portion of the first column of multipliers; and
in a second mode of operation of the DSP block:
   the plurality of multipliers comprises the first column of multipliers and a second column of multipliers;
   the adder circuitry is configurable to generate the first sum by adding the first portion of the plurality of products generated by the first column of multipliers; and
   the adder circuitry is configurable to generate the second sum by adding the second portion of the plurality of products generated by the second column of multipliers.

### CLAUSE 7.

The DSP block of clause 1, wherein the multiplexer network comprises a plurality of 4:1 multiplexers.

### CLAUSE 8.

The DSP block of clause 7, wherein the multiplexer network comprises a plurality of 2:1 multiplexers configurable to generate a plurality of outputs, wherein the plurality of 4:1 multiplexers is configurable to receive the plurality of outputs from the plurality of 2:1 multiplexers.

### CLAUSE 9.

The DSP block of clause 1, wherein the multiplexer network comprises plurality of 8:1 multiplexers.

### CLAUSE 10.

An integrated circuit device comprising a digital signal processing (DSP) block, wherein the DSP block comprises:
a fracturable column comprising:
   a plurality of weight registers configurable to receive and store a first plurality of values;
   a plurality of multipliers, wherein each respective multiplier of the plurality of multipliers is configurable to receive a respective value of the first plurality of values;
   one or more inputs configurable to receive a second plurality of values;
   a multiplexer network configurable to receive the second plurality of values and route each respective value of the second plurality of values to a multiplier of the plurality of multipliers, wherein the plurality of multipliers is configurable to simultaneously multiply each value of the first plurality of values by a respective value of the second plurality of values to generate a plurality of products; and
   first adder circuitry configurable to generate a first sum from a first portion of the plurality products and generate a second sum from a second portion of the plurality of products; and
input circuitry configurable to receive a first value and a second value from a second DSP block;
second adder circuitry configurable to:
   receive the first sum and the first value and generate a third sum by adding the first sum and the first value;
   receive the second sum and the second value and generate a fourth sum by adding the second sum and the second value; and
output circuitry configurable to output the third sum and the fourth sum from the DSP block to a third DSP block.

### CLAUSE 11.

The integrated circuit device of clause 10, wherein:
the multiplexer network comprises:
   a first plurality of multiplexers each configurable to receive a first portion of the second plurality of inputs and selectively output a value from the first portion of the second plurality of inputs; and
   a second plurality of multiplexers each configurable to receive a second portion of the second plurality of inputs and selectively output a value from the second portion of the second plurality of inputs;
the plurality of multipliers comprise:
   a first plurality of multipliers configurable to generate a first portion of the plurality of products based on the values received from the first plurality of multiplexers;
   a second plurality of multipliers configurable to generate a second portion of the plurality of products based on the values received from the second plurality of multiplexers; and
the adder circuitry is configurable to:
   generate the first sum by adding the first portion of the plurality of products; and
   generate the second sum by adding the second portion of the plurality of products.

### CLAUSE 12.

The integrated circuit device of clause 11, wherein:
the first portion of the second plurality of inputs comprises each input of the second portion of the second plurality of inputs; and
the second portion of the plurality of inputs comprises fewer than each input of the first portion of the plurality of second inputs.

### CLAUSE 13.

The integrated circuit device of clause 11, wherein the first portion of the second plurality of inputs is identical to the second portion of the second plurality of inputs.

### CLAUSE 14.

The integrated circuit device of clause 11, wherein the first plurality of multipliers comprises more multipliers than the second plurality of multipliers.

### CLAUSE 15.

The integrated circuit device of clause 10, wherein the fracturable column is a first fracturable column of a plurality of fracturable columns of the DSP block.

### CLAUSE 16.

The integrated circuit device of clause 10, wherein the integrated circuit device comprises a programmable logic device.

### CLAUSE 17.

A digital signal processing (DSP) block comprising:
a first fracturable column comprising:
   a plurality of weight registers configurable to receive and store a first plurality of values;
   a plurality of multipliers, wherein each respective multiplier of the plurality of multipliers is configurable to receive a respective value of the first plurality of values;
   one or more inputs configurable to receive a second plurality of values;
   a plurality of control registers configurable to store a third plurality of values, wherein:
      a multiplexer network is configurable to:
         receive the second plurality of values and the third plurality of values; and
         route each respective value of the second plurality of values to a multiplier of the plurality of multipliers based on the third plurality of values, wherein the plurality of multipliers is configurable to simultaneously multiply each value of the first plurality of values by a respective value of the second plurality of values to generate a plurality of products; and
      first adder circuitry configurable to generate a first sum from a first portion of the plurality products and generate a second sum from a second portion of the plurality of products; and
input circuitry configurable to receive a first value and a second value from a second DSP block;
second adder circuitry configurable to:
   receive the first sum and the first value and generate a third sum by adding the first sum and the first value;
   receive the second sum and the second value and generate a fourth sum by adding the second sum and the second value; and
output circuitry configurable to output the third sum and the fourth sum from the DSP block to a third DSP block.

### CLAUSE 18.

The DSP block of clause 17, wherein the third plurality of values is indicative of one or more locations of zeros in the first plurality of values.

### CLAUSE 19.

The DSP block of clause 18, comprising:
a second fracturable column comprising third adder circuitry configurable to generate a fifth sum, a sixth sum, and a seventh sum; and
a third fracturable column comprising fourth adder circuitry configurable to generate an eighth sum and a ninth sum.

### CLAUSE 20.

The DSP block of clause 17, wherein the DSP block in implemented on a field-programmable gate array (FPGA).

## Claims

1. A digital signal processing (DSP) block comprising:
a plurality of weight registers configurable to receive and store a first plurality of values;
a plurality of multipliers, wherein each respective multiplier of the plurality of multipliers is configurable to receive a respective value of the first plurality of values;
one or more inputs configurable to receive a second plurality of values;
a multiplexer network configurable to receive the second plurality of values and route each respective value of the second plurality of values to a multiplier of the plurality of multipliers, wherein the plurality of multipliers is configurable to simultaneously multiply each value of the first plurality of values by a respective value of the second plurality of values to generate a plurality of products; and
adder circuitry configurable to generate a first sum and a second sum based on the plurality of products.

2. The DSP block of claim 1, comprising a plurality of control registers configurable to store a third plurality of values, wherein:
the multiplexer network is configurable to receive the third plurality of values from the plurality of control registers; and
route the second plurality of values based on the third plurality of values.

3. The DSP block of claim 2, wherein the third plurality of values is indicative of one or more locations of zeros in the first plurality of values.

4. The DSP block of any one of claims 1 to 3, comprising:
second adder circuitry configurable to receive a first product and a second product of the plurality of products and generate a third sum by adding the first product and the second product;
third adder circuitry configurable to receive a third product and a fourth product of the plurality of products and generate a fourth sum by adding the third product and the fourth product;
fourth adder circuitry configurable to receive a fifth product and a sixth product of the plurality of products and generate a fifth sum by adding the fifth product and the sixth product;
fifth adder circuitry configurable to receive a seventh product and eighth product of the plurality of products and generate a sixth sum by adding the seventh product and the eighth product;
a first multiplexer configurable to receive the fourth sum and the sixth sum and provide a first output to a first adder of the adder circuitry, wherein the first output comprises either the fourth sum or the sixth sum, wherein the first adder is configurable to generate a seventh sum by adding the third sum and the first output;
a second multiplexer configurable to receive the fourth sum and the sixth sum and provide a second output to a second adder of the adder circuitry, wherein the second output comprises either the fourth sum or the sixth sum, wherein the second adder is configurable to generate the first sum by adding the fifth sum and the second output;
a third adder of the adder circuitry configurable to receive the first sum and the seventh sum and generate am eighth sum by adding the first sum and the seventh sum; and
a third multiplexer configurable to receive the seventh sum and the eighth sum and selectively output the seventh sum of the eighth sum as the second sum.

5. The DSP block of claim 4, comprising:
input circuitry configurable to receive a first value and a second value from a second DSP block;
a fourth adder configurable to receive the first sum and the first value and generate a ninth sum by adding the first sum and the first value;
a fifth adder configurable to receive the second sum and the second value and generate a tenth sum by adding the second sum and the second value; and
output circuitry configurable to output the ninth sum and the tenth sum from the DSP block to a third DSP block.

6. The DSP block of any one of claims 1 to 5, wherein:
in a first mode of operation of the DSP block:
the plurality of multipliers is a first column of multipliers;
the adder circuitry is configurable to generate the first sum by adding a first portion of the plurality of products generated by a first portion of the first column of multipliers; and
the adder circuitry is configurable to generate the second sum by adding a second portion of the plurality of products generated by a second portion of the first column of multipliers; and
in a second mode of operation of the DSP block:
the plurality of multipliers comprises the first column of multipliers and a second column of multipliers;
the adder circuitry is configurable to generate the first sum by adding the first portion of the plurality of products generated by the first column of multipliers; and
the adder circuitry is configurable to generate the second sum by adding the second portion of the plurality of products generated by the second column of multipliers.

7. The DSP block of any one of claims 1 to 6, wherein:
the multiplexer network comprises a first portion configurable to receive a first portion of the second plurality of values, wherein the first portion of the multiplexer network comprises a first plurality of multiplexers having a first number of multiplexers;
the multiplexer network comprises a second portion configurable to receive a second portion of the second plurality of values, wherein the second portion of the multiplexer network comprises a second plurality of multiplexers having the first number of multiplexers;
the plurality of multipliers comprises a first portion having a first number of multipliers, wherein the first portion of the plurality of multipliers is communicatively coupled to the first portion of the multiplexer network; and
the plurality of multipliers comprises a second portion having the first number of multipliers, wherein the second portion of the plurality of multipliers is communicatively coupled to the second portion of the multiplexer network, wherein the first number of multiplexers is equal to the first number of multipliers.

8. The DSP block of claim 7, wherein the multiplexer network comprises:
a third portion, wherein the third portion of the multiplexer network is communicatively coupled to the first portion of the multiplexer network, wherein the third portion of the multiplexer network is configurable to receive each value of the second plurality of values; and
a fourth portion, wherein the fourth portion of the multiplexer network is communicatively coupled to the second portion of the multiplexer network, wherein the fourth portion of the multiplexer network is configurable to receive each value of the second plurality of values.

9. The DSP block of any one of claims 1 to 8, wherein the multiplexer network comprises plurality of 8:1 multiplexers are configurable for one or more sparsity ratios.

10. An integrated circuit device comprising a digital signal processing (DSP) block of any one of claims 1 to 9.

11. The integrated circuit device of claim 10, wherein the integrated circuit device comprises a programmable logic device.
